# EUROPEAN PATENT APPLICATION

(11) **EP 2 380 858 A1**
(43) Date of publication of application: **26.10.2011**
(21) Application number: 10160532.7
(22) Date of filing: 21.04.2010
(51) Int. Cl.: C03C 17/25, C01G 19/00, C04B 41/87

(54) **Method for preparing a layer of In4Sn3O12 and optoelectronic device comprising such layer**

(71) Applicant: Thin Film Factory B.V., 8914 BH Leeuwarden (NL)
(72) Inventor: Meester, Bernard, 8927 AA Leeuwarden (NL); Nanu, Marian, 8927 AA Leeuwarden (NL); Nanu, Diana Elena, 8927 AA Leeuwarden (NL)
(74) Representative: Hatzmann, Martin

(57) **Abstract**

The invention is directed to a method for preparing a layer of In₄Sn₃O₁₂, to a layer of In₄Sn₃O₁₂ obtainable by said method, and to an optoelectronic device comprising said layer.

The method of the invention comprises
- mixing a solution of In and Sn salts in an atomic ratio of In and Sn of about 4:3 with a complexing agent for In; and
- applying the mixed solution onto a surface of a substrate, said surface having a temperature in the range of 250-400 °C, preferably in the range of 300-350 °C.

## Description

The invention is directed to a method for preparing a layer of In₄Sn₃O₁₂, to a layer of In₄Sn₃O₁₂ obtainable by said method, and to an optoelectronic device comprising said layer.

The n-type doped oxides of indium, tin, and zinc form the basis of compounds referred to as transparent conductive oxides (TCOs). These materials offer a combination of high electrical conductivity with optical transparency over the visible wavelengths, which is highly desirable in many optoelectronic applications (mostly in the form as a transparent electrode). To date, the industry standard transparent conductive oxides is tin-doped indium oxide, also referred to as ITO. This material is a diluted solid solution of tin(IV)oxide (SnO₂) in indium(III)oxide (In₂O₃) and has proven its potential in widespread applications such as electroluminescent devices, flat panel displays, and photovoltaic cells. ITO has a low resistivity and high transmittance, but it has the drawback of being rather expensive.

Indium, the primary metal of ITO, is rare and there is an increasing technological demand. In order to meet the increasing demand, the indium production has grown from 70 000 to 500 000 kg per year over the last 20 years to meet demand. This increasing technological demand for indium has lead to escalating costs.

There is a need for new materials that can be used as transparent conductive oxides and which are less expensive than the present industry standard tin-doped indium oxide.

Object of the present invention is to at least partly fulfil this need in the art. Further object of the invention is to provide a projected capacitive touchscreen with a low cost and highly efficient transparent conductive oxide.

In₄Sn₃O₁₂ has been suggested as a promising candidate to replace conventional ITO, although the conductivity of a layer of this material when obtained with a low pressure technique is lower than ceramic ITO. Nevertheless, the known preparation of highly conductive In₄Sn₃O₁₂ layers is rather elaborated, involving *e.g.* DC magnetron sputtering (Minami et al., Thin Solid Films 1997, 308-309, 13-18).

The invention is based on the insight that a layer of In₄Sn₃O₁₂ having comparable conductivity and transparency over the visible spectrum to ITO can be prepared in a relatively simple manner from a solution. The layer of In₄Sn₃O₁₂ has a significantly lower materials cost than a layer of ITO, because the net amount of required indium is much less.

Accordingly, in a first aspect the present invention is directed to a method for preparing a layer of In₄Sn₃O₁₂, comprising
- mixing a solution of In and Sn salts in an atomic ratio of In and Sn of about 4:3 with a complexing agent for In; and
- applying the mixed solution onto a surface of a substrate, said surface having a temperature in the range of 250-400 °C, preferably 300-350 °C.

In accordance with the method of the invention a solution of In and Sn salts is mixed with a complexing agent for indium. The In and Sn salts can suitably be In and/or Sn halides, such as In and/or Sn chlorides. In order to achieve the right stoichiometry, the In and Sn salts should be provided in such a ratio that the In and Sn are present in an atomic ratio of about 4:3.

The solution of In and Sn can comprise a suitable solvent, such as isopropylalcohol and/or water. Preferably, the solvent comprises a mixture of isopropylalcohol and water. More preferably, a mixture of isopropylalcohol and water in a ratio of 70:30-99:1, such as in a ratio of 80:20-95:5, is applied.

The complexing agent for In can be a chelating ligand capable of binding In and can for instance comprise one or more from the group consisting of acetyl acetonate, ethyl-acetoacetate, ethylenediaminetetraacetic acid and triethanolamine. Preferably, the chelating ligand comprises acetyl acetonate.

In a further step of the method of the invention the mixed solution is applied onto a surface that has a temperature in the range of 250-400 °C, preferably in the range of 300-350 °C. Preferably, the mixed solution is applied onto to the surface of a substrate by spraying. The mixed solution is suitably sprayed in a pulsed mode. Spraying the solution in pulsed mode has the advantage that the surface has time to recover from the cooling effect during the spray process. In a preferred embodiment, the mixed solution is applied onto the surface of a substrate under standard atmospheric pressure. Although the mixed solution is applied onto a heated surface, the mixed solution itself can advantageously be at room temperature.

The substrate can suitably comprise one or more from the group consisting of glass, silicon, ceramic materials, and transparent transitional metal oxides. Furthermore, organic polymers have been developed which can be heated up to temperatures of, for instance, 300 °C. Organic substrates based on such polymers can also be used as suitable substrates.

The In₄Sn₃O₁₂ is preferably doped with one or more charge carrier dopants. Any element which is stable as a 3+ valence can suitably be used as charge carrier dopant. Preferably, the In₄Sn₃O₁₂ is doped with at least aluminium as charge carrier dopant. Such doping improves the electrical conductivity of the layer. Although the inventors presently believe that the charge carrier is present in the In₄Sn₃O₁₂ as a dopant, it could be that the introduction of the charge carrier leads to the formation of a different bulk phase.

The concentration of A1 in the prepared layer of In₄Sn₃O₁₂ is preferably 0.1-5 mol% relative to the total amount of metal, preferably 1-4 mol%, more preferably 1.5-3 mol%, such as about 2 mol%.

The method of the invention results in a layer of In₄Sn₃O₁₂ with unique properties. Therefore, in a further aspect the invention is directed to a layer of In₄Sn₃O₁₂ obtainable by the method of the invention. It will be clear that the layer of In₄Sn₃O₁₂ does not necessarily consist of In₄Sn₃O₁₂ only, but that the layer can further comprise impurities such as the above mentioned charge carrier dopants.

The layer of In₄Sn₃O₁₂ according to the invention suitably has a thickness of 50-1000 nm, preferably 100-500 nm, more preferably 150-300 nm. These layer thicknesses are suitable for most applications in optoelectronic devices, such as transparent electrodes.

It was found that the method of the invention allows the preparation of a In₄Sn₃O₁₂ layer that has a light transmittance in the visible spectrum (350-700 nm) in the range of 80-95 %, preferably in the range of 85-95 %, as measured on a 250 nm thick layer. Light transmittance can be measured using a UV-VIS spectrophotometer.

Furthermore, In₄Sn₃O₁₂ layers prepared by the method of the invention preferably have a sheet resistance of less than 7 Ω/sq, preferably less than 5 Ω/sq, as measured on a 250 nm thick film. Sheet resistance can be measured, for instance, with a 4 points multimeter using the van der Pauw method which is well-known to the person skilled in the art.

The excellent electrical conductive properties of the layers of the invention enable the use of these layers in a wide variety of applications, such as in optoelectronic devices. Accordingly, in a further aspect the invention is directed to an optoelectronic device comprising a layer of In₄Sn₃O₁₂ according to the invention.

In a highly advantageous embodiment, the layer of In₄Sn₃O₁₂ according to the invention is applied in a projected capacitive touchscreen. Traditional touchscreen sensing technologies, such as capacitive, resistive and surface acoustic wave are surface-active which renders them susceptible to surface variance effects during the lifetime of the touchscreen. Capacitive sensor arrays are often subject to drift, which means that regular recalibration is required and consequently, maintenance is more expensive. Resistive touch technology is more prone to damage caused by sharp pointing devices such as a pen or the corner of a credit card. A projected capacitive touchscreen eliminates all of these problems by providing a robust, reliable and calibration-free, non-surface active glass fronted touch solution.

Projected capacitive touchscreens are based on the principle of embedding an array of micro-fine sensing wires within a multi-layer laminated screen behind a protective front surface, ensuring that the sensing medium is well-protected from accidental and malicious damage. This technology is extremely robust and reliable, offers one of the industry's highest light transmission characteristics and can be operated with a gloved or ungloved hand.

Therefore, in yet a further aspect the invention is directed to a projected capacitive touchscreen comprising one or more layers of In₄Sn₃O₁₂ according to the invention. Typically, one or more of the micro-fine sensing transparent conductive oxide pads in the embedded array can be In₄Sn₃O₁₂ layers according to the invention. Preferably, all of the micro-fine sensing transparent conductive oxide pads in the embedded array are In₄Sn₃O₁₂ layers according to the invention. During preparation of the projected capacitive touchscreen, the one or more In₄Sn₃O₁₂ layers may be deposited on the protective front surface (such as on a glass substrate with a thickness of 4 mm or more), but it is also possible that the one or more In₄Sn₃O₁₂ layers are laminated.

When used in a projected capacitive touchscreen, it is preferred to include one or more charge carrier dopants in the In₄Sn₃O₁₂ layer, more preferably aluminium.

The Example will now be illustrated by the following non-limiting Example.

### Example

A mix solution of In and Sn chlorine salts in fix ratio of 4/3 was solved in a mix of isopropylalcohol/water 90/10, acetyl acetonate as surfactant and complexing agent for In, and aluminiumtrichloride. The concentration of Al was kept constant at 2 mol%, relative to the total amount of metal. The mixed solution was sprayed over a heated glass surface (325 °C) in a pulsed mode. A film with a thickness of 250 nm was obtained which was highly electrically conductive (less than 5 Ω/sq). The 250 nm thick film had a average light transmission in the spectrum of 400-700 nm of 86 % as measured on a UV-VIS spectrophotometer.

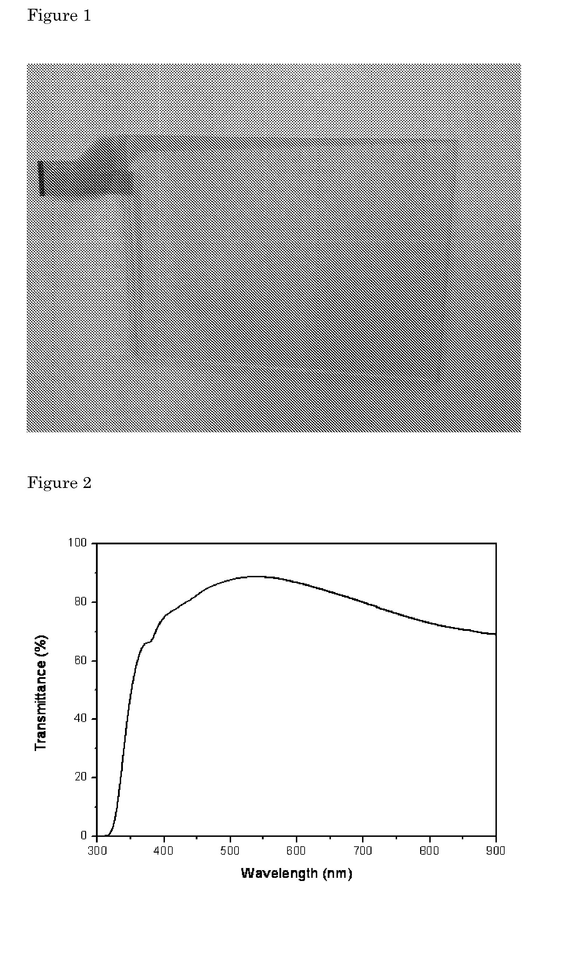

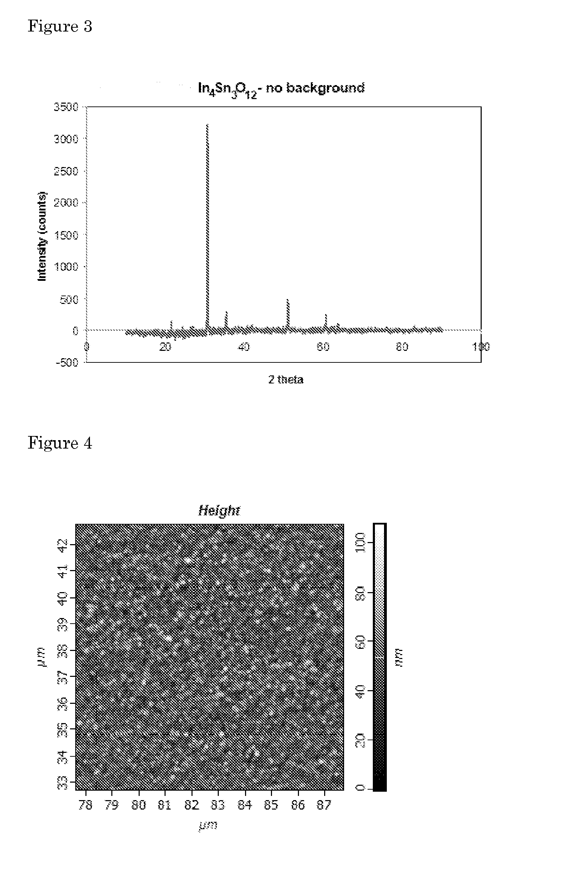

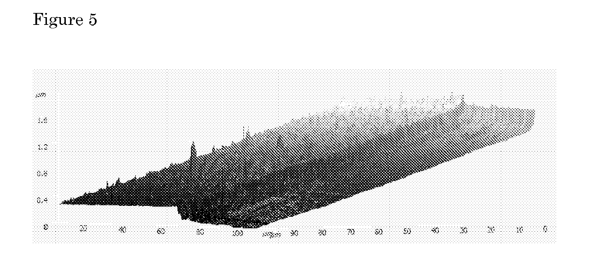

The obtained layer was further examined using X-ray diffraction, scanning electron microscopy, and atomic force microscopy. The results are shown in the Figures (Figure 1: photograph of the deposited layer; Figure 2: UV-VIS spectrum; Figure 3: XRD spectrum; Figure 4: SEM micrograph; Figure 5: AFM microgarph).

## Claims

1. Method for preparing a layer of In₄Sn₃O₁₂, comprising
- mixing a solution of In and Sn salts in an atomic ratio of In and Sn of about 4:3 with a complexing agent for In; and
- applying the mixed solution onto a surface of a substrate, said surface having a temperature in the range of 250-400 °C, preferably in the range of 300-350 °C.

2. Method according to claim 1, wherein said In₄Sn₃O₁₂ is doped with one or more charge carrier dopants, preferably the one or more charge carrier dopants comprise Al.

3. Method according to claim 1 or 2, wherein said solution of In and Sn comprises isopropylalcohol and water, preferably in a ratio of 70:30-99:1, more preferably in a ratio of 80:20-95:5.

4. Method according to any one of claims 1-3, wherein said complexing agent for In comprises one or more selected from the group consisting of acetyl acetonate, ethyl-acetoacetate, ethylenediaminetetraacetic acid and triethanolamine.

5. Method according to any one of claims 1-4, wherein said mixed solution is applied onto the surface of the substrate by spraying.

6. Method according to any one of claim 5, wherein said solution is sprayed over the surface in pulsed mode at atmospheric pressure.

7. Method according to any one of claims 2-6, wherein the concentration of Al in the layer is 0.1-5 mol% relative to the total amount of metal, preferably 1-4 mol%, more preferably 1.5-3 mol%.

8. Method according to any one of claims 2-7, wherein the substrate comprises one of more of the group consisting of glass, silicon, ceramics, transparent transitional metal oxides, and polymers.

9. Layer of In₄Sn₃O₁₂ obtainable by a method according to any one of claims 1-8.

10. Layer according to claim 9, having a thickness of 50-1000 nm, preferably 100-500 nm, more preferably 150-300 nm.

11. Layer according to claim 9 or 10, having a light transmittance in the range of 350-700 nm in the range of 80-95 %, preferably in the range of 85-95 %, as measured on a 250 nm thick layer.

12. Layer according to any one of claims 9-11, having a sheet resistance of less than 7 Ω/sq, preferably less than 5 Ω/sq, as measured on a 250 nm thick layer.

13. Optoelectronic device comprising a layer according to any one of claims 9-12.

14. Optoelectronic device according to claim 13 in the form of a projected capacitive touchscreen.
